# EUROPEAN PATENT SPECIFICATION

(11) **EP 3 169 154 B1**
(45) Date of publication and mention of the grant of the patent: **01.01.2020**
(21) Application number: 15760245.9
(22) Date of filing: 14.07.2015
(51) Int. Cl.: A01N 1/02

(54) **DILUENT FOR SEMEN PRESERVATION**
VERDÜNNER FÜR DIE KONSERVIERUNG VON SAMENFLÜSSIGKEIT
DILUANT POUR LA CONSERVATION DE SPERME

(30) Priority: 14.07.2014 CO 14151563
(43) Date of publication of application: 24.05.2017
(73) Proprietor: Politécnico Colombiano Jaime Isaza Cadavid, Medellin (CO); Universidad Nacional de Colombia, Bogotá 111321 (CO)
(72) Inventor: RESTREPO BETANCUR, Giovanni, Medellin (CO); ROJANO, Benjamín Alberto, Bogotá (CO)
(74) Representative: ABG Intellectual Property Law, S.L.
(86) International application number: PCT/IB2015/055337
(87) International publication number: WO 2016/009363

(56) References cited:
- WO-A1-02/054864
- ARFA ET AL: "Coating papers with soy protein isolates as inclusion matrix of carvacrol", FOOD RESEARCH INTERNATIONAL, ELSEVIER APPLIED SCIENCE, BARKING, GB, vol. 40, no. 1, 15 November 2006 (2006-11-15), pages 22-32, XP005764695, ISSN: 0963-9969, DOI: 10.1016/J.FOODRES.2006.07.011
- S Frydrychová ET AL: "EFFECT OF NATURAL SUBSTANCES AS A POTENTIAL SUBSTITUTE FOR ANTIBIOTICS IN BOAR SEMEN EXTENDER ON SEMEN SURVIVAL TIME", Research in Pig Breeding, 1 December 2012 (2012-12-01), pages 20-23, XP55221791, Retrieved from the Internet: URL:http://www.respigbreed.cz/2012/2/5.pdf [retrieved on 2015-10-19]
- GADEA J: "Review: Semen extenders used in the artificial insemination of swine", SPANISH JOURNAL OF AGRICULTURAL RESEARCH, MINISTERIO DE EDUCACION Y CIENCIA, INSTITUTO NACIONAL DE INVESTIGACION Y TECNOLOGIA AGRARIA Y ALIMENTARIA (I N I A), ES, vol. 1, no. 2, 1 January 2003 (2003-01-01) , pages 17-27, XP003025968, ISSN: 1695-971X
- PURSEL V G ET AL: "Freezing of boar spermatozoa: fertilizing capacity with concentrated semen and a new thawing procedure", JOURNAL OF ANIMAL SCIENCE, AMERICAN SOCIETY OF ANIMAL SCIENCE, US, vol. 40, no. 1, 1 January 1975 (1975-01-01), pages 99-102, XP003020424, ISSN: 0021-8812
- Jordi Roca ET AL: "Survival and Fertility of Boar Spermatozoa After Freeze-Thawing in Extender Supplemented With Butylated Hydroxytoluene", Journal of Andrology, 1 May 2004 (2004-05-01), pages 397-405, XP55222026, United States Retrieved from the Internet: URL:http://onlinelibrary.wiley.com/doi/10. 1002/j.1939-4640.2004.tb02806.x/pdf
- PAGL R ET AL: "Comparison of an extender containing defined milk protein fractions with a skim milk-based extender for storage of equine semen at 5<o>C", THERIOGENOLOGY, LOS ALTOS, CA, US, vol. 66, no. 5, 15 September 2006 (2006-09-15), pages 1115-1122, XP027930257, ISSN: 0093-691X [retrieved on 2006-09-15]
- ROJANO ET AL: "Experimental and theoretical determination of the antioxidant properties of isoespintanol (2-isopropyl-3,6-dimethoxy-5-methylphenol) ", JOURNAL OF MOLECULAR STRUCTURE, ELSEVIER, AMSTERDAM, NL, vol. 877, no. 1-3, 21 March 2008 (2008-03-21), pages 1-6, XP022552915, ISSN: 0022-2860
- Paula L Galeano ET AL: "SYNTHESIS AND ANTIOXIDANT ACTIVITY OF TWO ISOESPINTANOL DERIVATIVES", Revista Colombiana de Química, 1 December 2010 (2010-12-01), pages 173-180, XP055222466, Colombia Retrieved from the Internet: URL:http://www.redalyc.org/pdf/3090/309026 684002.pdf [retrieved on 2015-10-21]
- M Hossain ET AL: "ANTIOXIDANT ACTIVITY OF SPICE EXTRACTS AND PHENOLICS IN COMPARISON TO SYNTHETIC ANTIOXIDANTS", Rasayan Journal of Chemistry, 1 January 2008 (2008-01-01), pages 751-756, XP055222465, Ireland Retrieved from the Internet: URL:http://arrow.dit.ie/cgi/viewcontent.cg i?article=1135&context=schfsehart [retrieved on 2015-10-21]
- Chang-Ying Hu ET AL: "Release of Thymol, Cinnamaldehyde and Vanillin from Soy Protein Isolate Films into Olive Oil", Packaging Technology and Science, vol. 25, no. 2, 21 March 2012 (2012-03-21) , pages 97-106, XP55178364, ISSN: 0894-3214, DOI: 10.1002/pts.964
- Jia Xue ET AL: "Thymol Nanoemulsified by Whey Protein-Maltodextrin Conjugates: The Enhanced Emulsifying Capacity and Antilisterial Properties in Milk by Propylene Glycol", Journal of Agricultural and Food Chemistry, vol. 61, no. 51, 12 December 2013 (2013-12-12), pages 12720-12726, XP55469915, US ISSN: 0021-8561, DOI: 10.1021/jf4043437
- B.A. Ball ET AL: "Effect of antioxidants on preservation of motility, viability and acrosomal integrity of equine spermatozoa during storage at 5°C", THERIOGENOLOGY, vol. 56, no. 4, 1 September 2001 (2001-09-01), pages 577-589, XP55469962, US ISSN: 0093-691X, DOI: 10.1016/S0093-691X(01)00590-8

## Description

### FIELD OF INVENTION

The present invention relates to a diluent for the protection, preservation and cryopreservation of semen. The diluent contains at least one cytoprotective compound derived from isopropylphenols along with cryoprotective agents and coadjuvants that allow for increased sperm motility, vitality and functionality.

### PRIOR ART

In biotechnological processes that involve the manipulation, maintenance, preservation or cryopreservation of reproductive cells, these quickly become damaged due to different factors, making them lose structural and functional integrity, and thereby reducing the efficacy of the procedures in which they are employed.

Spermatozoa are highly mobile and metabolically very active cells. One of the factors that is most closely related to low sperm fertility is oxidative stress (1), which causes a very important loss of motility and viability, and decreases their ability to fertilize (2, 3). Additionally, semen is extremely sensitive to the cellular changes caused by freezing (4, 5).

One strategy to diminish these effects is to store semen in media or diluents that are not only rich in nutrients, but also possess the appropriate physical and chemical properties for its preservation. Specifically, spermatozoa require various essential components for their preservation, namely, sugars, proteins, cryoprotectors, and buffer systems and electrolytes.

In order to achieve proper preservation of semen and its cells, the diluent must contain antioxidant compounds to reduce the damage caused by reactive species, such as free radicals, thereby preserving the reproductive cells for long periods of time. Most of the antioxidants described thus far do not have enough protective ability, since generally only a meager 30% of sperm cells retain their integrity and motility.

In a previous study (1), antioxidants such as α-tocopherol, ascorbic acid, bovine serum albumin and TEMPO were mixed with equine semen subjected to freezing. No positive results for sperm motility were found during cryopreservation, as the inclusion of BHT as an antioxidant significantly reduced the sperm cells' progressive motility.

In some publications, researchers evaluated the addition of antioxidant compounds (e.g., reduced glutathione, catalase and superoxide dismutase) to semen diluents and concluded that they do not significantly improve the motility, DNA fragmentation, vitality nor mitochondrial activity of thawed equine spermatozoa (6). Likewise, other researchers have assessed the effect of adding acetylcysteine and glutathione peroxidase to equine semen before freezing it, but did not find any relevant effects (7).

Other compounds with antioxidant activity have been shown to not affect the quality of cryopreserved sperm, and some have even exhibited detrimental effects. In a study in which N-acetylcysteine was used as the antioxidant for the storage of equine semen, researchers found no beneficial effects on total motility, progressive motility nor on the integrity of the cells' plasma membrane after 24, 48 and 72 hours (8). Neither using catalase enzyme (2) nor high concentrations of ascorbic acid (9) provide any advantage, but on the contrary, negatively impact sperm motility.

Additionally, pyruvate and lactate used as antioxidants in refrigerated equine semen did not prevent the detrimental effects of hydrogen peroxide (10). The authors concluded that lactoferrin used as a supplemental antioxidant in a milk- and caseinates-based diluent did not have any effect on the motility, membrane integrity nor nitric oxide levels of refrigerated equine semen (11).

US8435730 describes a semen diluent that contains phospholipids, a surfactant, to minimize the formation of ice crystals during freezing, a carbohydrate, a buffer, and glycerol or dimethyl sulfoxide. Furthermore, the disclosed diluent can contain up to 3.0% w/w of antioxidants, such as vitamin E, vitamin C, vitamin A, BHA and BHT.

US20060257842 discloses media and molecules for the cryopreservation of cells, including spermatozoa, that protect specific regions of the cell membrane, allow for its repair, sustain metabolite production and incidentally serve as antioxidants to encourage the cells' integrity and survival. Among the disclosed molecules are glycerylphosphorylcholine, glycerophosphoinositol, eicosapentaenoic acid, trehalose, betaine, taurine and acetyl-L-carnitine.

J. Roca et al. ("Survival and fertility of boar spermatozoa after freeze-thawing in extender supplemented with butylated hydroxytoluene", Journal of Andrology 2004, 25(3), 397-405) disclose compositions for use as semen extenders comprising the antioxidant butylated hydroxytoluene (BHT).

One of the most important procedures in assisted reproduction is the cryopreservation of semen, since it allows for its transportation and long-term storage (12). There are various methods used in semen cryopreservation, which vary mainly in the speed of temperature decrease, the storage media and the cryoprotectors used. Some commercial products for semen preservation, such as INRA96®¹, GENT®², EQUIPRO®³ and BOTUCRIO®⁴ are widely used.
¹ http://www.inra.fr/
² http://www.minitube.de/
³ http://www.minitube.de/
⁴ http://nicadon.com/

Cryoprotectors are essential for the survival of sperm cells subjected to low temperatures, so their chemical nature and composition are fundamental factors. Their function is to dehydrate the cells and to decrease the freezing temperature of the water inside the cells, thereby diminishing the damage caused by ice crystals to various structures and organelles.

Several cryoprotectors have been assessed in the cryopreservation process, including glycerol, dimethyl sulfoxide, ethylene glycol, dimethylformamide, among others (13, 14, 15). Methylformamide and dimethylformamide, due to their low molecular weight, can more easily penetrate membranes as compared to the conventional cryoprotectors that exhibit a higher osmotic cytotoxicity, such as glycerol (16).

Likewise, the inclusion of protein-containing substances that serve as extracellular protectors in diluents has also been studied. Among these are egg yolk (17), bovine serum albumin, equine serum, bovine serum, soy protein, polyvinyl alcohol (18) and ultra-pasteurized skim milk (19).

Mammalian sperm suffers a dramatic decrease in fertilization potential when it is subjected to cryopreservation (20, 21). In spite of the many efforts to optimize semen cryopreservation, several recent investigations have shown that the fertilization potential of sperm has not been significantly improved, which is why the quality of cryopreserved sperm remains very low (15, 16, 17, 22, 23, 24).

### BRIEF DESCRIPTION OF THE INVENTION

To solve this technical problem, the inventors assessed the effect of including compounds derived from isopropylphenol in diluents for semen preservation. These compounds have been shown to be good cytoprotective agents and to possess excellent antioxidant properties.

The inclusion of these antioxidant compounds in a semen diluent leads to a drastic reduction in the quantity of reactive species and improves every sperm-quality parameter after thawing. Isopropylphenols, such as thymol (2-isopropyl-5-methylphenol), carvacrol and isoespintanol (2-isopropyl-3,6-dimethoxy-5-methylphenol), proved to be very effective.

### DETAILED DESCRIPTION OF THE INVENTION

The present invention relates to a semen diluent or preservation medium that contains at least one antioxidant compound derived from isopropylphenol as a cytoprotector, along with one or more cryoprotectors and coadjuvants as defined in claim 1.

The antioxidant is selected from the group of: isoespintanol (2-isopropyl-3,6-dimethoxy-5-methylphenol), carvacrol (5-isopropyl-2-methylphenol) and mixtures thereof. In addition, the diluent of the invention includes one or more cryoprotectors selected from ethylene glycol, methyl formamide, dimethylformamide, diethylformamide, egg yolk and mixtures thereof, as well as coadjuvants selected from glucose, fructose, sucrose, saturated and/or unsaturated lipids, caseins, albumins, seminal plasma, vitamin E, vitamin C, vitamin A, phosphate buffer system, tris buffer system, ascorbic acid, α-tocopherol, β-carotene, caffeine, pentoxifylline, taurine, gentamicin, penicillin, streptomycin, amphotericin and mixtures thereof.

Thymol is found in nature in essential oils from thyme *(Thymus vulgare)* and oregano *(Origanum vulgare).* The antioxidant potential of oregano extracts is attributed to thymol and its isomer carvacrol and has been determined by its ability to inhibit lipid peroxidation, thereby protecting DNA from damaged caused by hydroxyl radicals. These extracts are much more effective than other antioxidants, such as propyl gallate, BHT and BHA (25).

Other properties of thymol and carvacrol have also been reported (26, 27, 28). In various studies with animal models, carvacrol and thymol have been shown to have anti-carcinogenic properties by acting at different cellular and molecular levels (28, 29).

Isoespintanol (2-isopropyl-3,6-dimethoxy-5-methylphenol) is a biosynthetic monophenol derived from thymol, and can be obtained from the ether extract of *Oxandra cf xylopioides* leaves (1.5% on a dried basis) and has excellent antioxidant properties. It serves as a good reducing agent, with a high potential to trap free radicals in different media (30).
These compounds owe their antioxidant properties to a hydrogen atom transfer (HAT) mechanism. It has been proven that isoespintanol is one of the isopropylphenols with greatest potential to capture free radicals. Results obtained from ferric reducing antioxidant power (FRAP) and 2,2-diphenyl-1-picrylhydrazyl radical (DPPH•) reduction assays showed that isoespintanol has at least two times more antioxidant activity than thymol, due to the effects of the substituents on the aromatic ring, and intra- and inter-molecular hydrogen bond formation (31).

As a natural antioxidant, isoespintanol reacts with DPPH• radical at a rate similar to that of BHT, one of the most widely used synthetic antioxidants in the food and pharmaceutical industries. In foods such as butter, for example, isoespintanol inhibits peroxidation in concentrations similar to that of BHT. Additionally, isoespintanol has also been shown to have anti-inflammatory properties, as it reduces carrageenan-induced foot inflammation by 43% in some rodents, reducing interleukin-1β production by as much as 72%.

Isoespintanol in the present invention's diluent improves semen quality parameters, such as motility, viablity, membrane integrity and mitochondrial activity after cryopreservation. The invention's diluent allows for cell storage in cryopreservation conditions (refrigeration, freezing or vitrification), and manages to reduce the detriments to cell survival, integrity and functionality, thereby boosting their use in assisted reproduction and biotechnological applications.

In the preferred embodiment of the invention, the concentration of isopropylphenols in the diluent for semen preservation is between 10µM and 300µM, which inhibits the production of reactive oxygen species (ROS) and reduces lipid peroxidation, thereby prolonging the survival and functionality of sperm cells *in vitro.*

A dilution ranging from 1:1 to 1:10 of semen to the present invention's diluent prolongs the preservation of spermatozoa and allows them to be used more effectively in artificial insemination or embryo production, due to the cytoprotective effect of isopropylphenols.

In the preferred embodiment, the invention's diluent further contains components such as carbohydrates (glucose, fructose and/or sucrose), lipids (saturated and/or unsaturated), proteins (caseins, albumins and or seminal plasma), vitamins (E, C, A), buffer systems (phosphate, tris), antioxidants (ascorbic acid, α-tocopherol, β-carotene), potentiators (caffeine, pentoxifylline, taurine), antibiotics (gentamicin, penicillin, streptomycin, amphotericin) and a pharmaceutically acceptable carrier (balanced and isotonic electrolyte solution).

The following examples describe the invention in greater detail.

### EXAMPLES

### EXAMPLE 1 (Reference Example)

The present invention's diluent can be prepared using the components in Table 1. Each of the components is weighed on an analytical scale and added to a container with 80 mL of ultrapure water. Then, the mixture is homogenized for 15 minutes and enough ultrapure water is added to a total of 100 mL to obtain Formulation A.

**Table 1.**

| ***COMPONENT*** | ***CONCENTRATION*** |
|---|---|
| Semi-skimmed milk | 0.28% |
| Sodium caseinates | 1.57% |
| Sucrose | 2.58% |
| Fructose | 0.47% |
| Glucose | 2.03% |
| Gentamicin sulfate | 0.10% |
| Isopropylphenol derivatives | 10.0 - 300.0 µM |
| Ultrapure water | q.s. 100 mL |

### EXAMPLE 2 (Reference Example)

Two diluents are prepared in accordance with Example 1, adding isoespintanol to one of them, and thymol to the other. A sample of equine semen is diluted in a 1:1 ratio with each of the diluents, separately. They are refrigerated for 6 hours and then parameters such as cell motility, vitality and plasma membrane integrity are assessed, finding results between 70% and 90% for each.

### EXAMPLE 3 (Reference Example)

Two diluents are prepared in accordance with Example 1, adding isoespintanol to one of them, and thymol to the other. In order to determine the cytoprotective (antioxidant) potential of each, the effects of adding different concentrations of these compounds to semen ejaculates were studied. The inhibition of ROS production and the reduction of lipid peroxidation were assessed, thereby determining the effective range as well as the maximum inhibitory concentration of thymol and isoespintanol (Tables 2 and 3).

**Table 2. Results of the inhibition of ROS production**

| ***CONCENTRATION (µM)*** | ***INHIBITION BY THYMOL (%)*** | ***INHIBITION BY ISOESPINTANOL (%)*** |
|---|---|---|
| 20 | 11.7 | 16.0 |
| 40 | 12.3 | 24.2 |
| 50 | 51.2 | 34.5 |
| 60 | 26.0 | 16.9 |
| 80 | 21.0 | 6.1 |
| 100 | 27.6 | 5.6 |

**Table 3. Results of the lipid peroxidation inhibition**

| ***CONCENTRATION (µM)*** | ***INHIBITION BY THYMOL (%)*** | ***INHIBITION BY ISOESPINTANOL (%)*** |
|---|---|---|
| 20 | 48.1 | 21.1 |
| 40 | 47.7 | 29.9 |
| 50 | 40.8 | 29.4 |
| 60 | 36.6 | 51.1 |
| 80 | 47.0 | 42.1 |
| 100 | 28.3 | 29.8 |

The inhibition of ROS production and lipid peroxidation in considerable proportions in fresh semen diluted with diluents supplemented by thymol and isoespintanol demonstrates their cytoprotective properties. These results show the antioxidant potential of these compounds in diluents for the preservation of semen.

### EXAMPLE 4

A diluent is prepared in accordance with Example 1 and 2% v/v of chicken egg yolk is added. The mixture is homogenized for 15 minutes at room temperature with a magnetic stir bar at 800 rpm for 15 minutes and 5.0% v/v of N,N-dimethylformamide is added while stirring, until Formulation B (POLI-CRYO) is obtained. The diluent thus obtained is suitable for the cryopreservation of semen subjected to low temperatures in slow, fast, or ultrafast freezing programs, allowing for very long-term storage.

### EXAMPLE 5

Two diluents are prepared in accordance with Example 4, one with isoespintanol (20 µM) and the other with thymol (50 µM). The example using thymol is for comparison only. A sample of equine semen was centrifuged in order to extract the seminal plasma, the precipitate was diluted with each diluent to a concentration of 100 million sperm cells/mL and was supplemented with equine seminal plasma (10% v/v).

Each sample was subjected to a fast freezing program, for 20 minutes at 5°C, and for 15 minutes in liquid nitrogen vapor. Post-thawing ROS production measurements of the semen were made. The results, compared to the commercial diluent EQUIPRO®, were the following (Table 4):

**Table 4. Results of ROS production in thawed semen.**

| ***DILUENT*** | ***n*** | ***ROS PRODUCTION (RFU)*** | ***RATE OF PRODUCTION (ROS*/*min)*** |
|---|---|---|---|
| Control (EQUIPRO®) | 804 | 18.1 ± 2.3^{a} | 0.0069 |
| POLI-CRYO (50 µM Thymol) | 723 | 16.4 ± 2.3^{b} | 0.0062 |
| POLI-CRYO (20 µM Isoespintanol) | 723 | 15.7 ± 2.3^{c} | 0.0064 |

| | | | |
|---|---|---|---|
| Different letters denote a statistically significant difference (P≤0.05). n= number of ROS measurement repetitions. | | | |

The results show a reduced ROS production in thawed semen when the present invention's diluent is used.

### EXAMPLE 6

A diluent in accordance with Example 4 is prepared with 20µM isoespintanol (POLY-CRYO). A sample of equine semen was centrifuged in order to extract the seminal plasma, the precipitate was diluted with each diluent to a concentration of 100 million sperm cells/mL and was supplemented with equine seminal plasma (10% v/v).

The same semen freezing protocol described in Example 5 was carried out and the following post-thawing measurements of sperm cells were taken: progressive motility, vitality, plasma membrane integrity and mitochondrial activity. The results, compared to the semen diluent EQUIPRO®, were the following (Table 5):

**Table 5. Quality and integrity results from thawed equine semen.**

| ***DILUENT*** | ***n*** | ***PROGRESSIVE MOTILITY (%)*** | ***VITALITY (%)*** | ***MEMBRANE INTEGRITY (%)*** | ***MITOCHONDRIAL ACTIVITY (RFU)*** |
|---|---|---|---|---|---|
| Control EQUIPRO® | 84 | 36.4 ± 1.4^{a} | 51.8 ± 1.4^{a} | 36.53 ± 1.2^{a} | 206.3 ± 4.8^{a} |
| POLI-CRYO (20 µM Isoespintanol | 87 | 47.0± 1.1^{b} | 57.1 ± 0.9^{b} | 44.4 ± 1.1^{b} | 209.4 ± 4.8^{b} |

| | | | | | |
|---|---|---|---|---|---|
| Different letters denote a statistically significant difference (P≤0.05). | | | | | |

Based on the results, the invention's diluent shows a greater protective effect on cryopreserved equine semen in terms of post-thawing vitality and motility.

### EXAMPLE 7

A diluent in accordance with Example 4 is prepared with 20µM isoespintanol (POLY- RYO). A sample of equine semen was centrifuged in order to extract the seminal plasma, the precipitate was diluted with each diluent to a concentration of 100 million sperm cells/mL and was supplemented with equine seminal plasma (10% v/v).

Post-thawing measurements of the sperm cells' total motility, progressive motility and curvilinear velocity (VCL) were made using computer-assisted sperm analysis (CASA). The results, compared to the two semen diluents EQUIPRO® and GENT®, were the following (Table 6):

**Table 6. Results of post-thawing assessment using computer-assisted sperm analysis (CASA).**

| ***DILUENT*** | ***n*** | ***TM*** | ***PM*** | ***VCL*** |
|---|---|---|---|---|
| EQUIPRO® | 22 | 50.9 ± 19.4^{b} | 23.0 ± 12.0^{b} | 67.5 ± 11.7^{b} |
| GENT® | 26 | 42.2±15.1^{c} | 21.5 ± 9.2^{b} | 66.4 ± 17.8^{b} |
| POLI-CRYO (20 µM Isoespintanol) | 15 | 67.0 ± 21.5^{a} | 29.2 ± 13^{a} | 71.0 ± 12.0^{a} |

| | | | | |
|---|---|---|---|---|
| Different letters denote a statistically significant difference (P≤0.05). Total motility (TM), progressive motility (PM), curvilinear velocity (VCL). | | | | |

According to the results, the present invention's diluent improves the motility parameters of cryopreserved semen, which is beneficial to the persistence of sperm cells' fertilization potential.

### REFERENCES CITED

1. BALL B, MEDINA V, GRAVANCE C, BAUMBER J. Effect of antioxidants on preservation of motility, viability and acrosomal integrity of equine spermatozoa during storage at 5°C. Theriogenology 2001;56(4):577-589.
2. AURICH J, SCHÖNHERR U, HOPPE H, AURICH C. Effects of antioxidants on motility and membrane integrity of chilled-stored stallion semen. Theriogenology 1997;48(2):185-192.
3. BAUMBER J, VO A, SABEUR K, BALL B. Generation of reactive oxygen species by equine neutrophils and their effect on motility of equine spermatozoa. Theriogenology 2002;57:1025-1033.
4. BALL B. Oxidative stress, osmotic stress and apoptosis: Impacts on sperm function and preservation in the horse. Anim Reprod Sci. 2008;107(3-4):257-267.
5. BALL B, VO A. Osmotic tolerance of equine spermatozoa and the effects of soluble cryoprotectants on equine sperm motility, viability, and mitochondrial membrane potential. J Androl. 2001;22(6):1061-1069.
6. BAUMBER J, BALL B, LINFOR J. Assessment of the cryopreservation of equine spermatozoa in the presence of enzyme scavengers and antioxidants. Am J Vet Res. 2005;66(5):772-779.
7. BARROS L, SILVA S, ALMEIDA F, SILVA E, CARNEIRO G, GUERRA M. Effect of addition of acetyl-cysteine and glutathione peroxidase in freezing extender of stallion semen. J Equine Vet Sci. 2012;32:475-518.
8. PAGL R, AURICH J, MÜLLER-SCHLÜSSER F, KANKOFER M, AURICH A. Comparison of an extender containing defined milk protein fractions with a skim milk-based extender for storage of equine semen at 5°C. Theriogenology 2006;66(5):1115-1122.
9. VASCONCELOS J, CHAVEIRO A, GOIS A, MOREIRA DA SILVA F. Effects of a-tocopherol and ascorbic acid on equine semen quality after cryopreservation. J Equine Vet Sci. In press 2013.
10. WEBB G, ARNS M. Effect of pyruvate and lactate on motility of cold stored stallion spermatozoa challenged by hydrogen peroxide. J Equine Vet Sci. 2006;26(9):406-411.
11. MARTINS H, SOUZA M, PENNA C, DA SILVA G, CORTES S, STAHLBERG R, et al. Effects of lactoferrin supplementation to milk- and caseinate-based extenders on sperm motility, membrane integrity and nitric oxide levels of cooled stallion semen. J Equine Vet Sci. 2012;32:475-518.
12. LOOMIS P, GRAHAM J. Commercial semen freezing: individual male variation in cryosurvival and the response of stallion sperm to customized freezing protocols. Anim Reprod Sci. 2008;105:119-128.
13. CHENIER T, MERKIES K, LEIBO S, PLANTE C, JOHNSON W. Evaluation of cryoprotective agents for use in the cryopreservation of equine spermatozoa. AAEP Proceedings 1998;44:5-6.
14. MANTOVANI R, ROTA A, PALOMO M, BAILONI L, VINCENTI L. Comparison between glycerol and ethylene glycol for the cryopreservation of equine spermatozoa: semen quality assessment with standard analyses and with the hypoosmotic swelling test. Reprod Nutr Dev. 2002;42(3):217-226.
15. MEDEIROS A, GOMES G, CARMO M, PAPA F, ALVARENGA M. Cryopreservation of stallion sperm using different amides. Theriogenology 2002; 58: 273-276.
16. SQUIRES EL, KEITH SL, GRAHAM JK. Evaluation of alternative cryoprotectants for preserving stallion spermatozoa. Theriogenology 2004; 62: 1056-1065.
17. JANETT, F.; SACHER, K.; HASSIG, M. Y THUN, . Quality of Raw and of Cold-Stored Semen in Icelandic Stallions. In: Journal of Equine Veterinary Science. 2012;32:390-395.
18. PALACIOS, A. and QUINTERO, L.Z. Efecto de la sustitución de yema de huevo por albúmina sérica bovina, suero equino o suero bovino en el diluyente de congelación sobre la viabilidad posdescongelación del espermatozoide equino. (Effect of the substitution of egg yolk for bovine serum albumin, equine serum or bovine serum in the freezing diluent on the post-thawing viability of equine epermatozoa.) In: Revista veterinaria (Veterinary Journal) Mexico 1996;27(3):221-227.
19. BOETA M, QUINTERO L. Utilización de leche descremada ultrapasteurizada como diluyente de semen refrigerado de burro, destinado a la inseminación de yeguas. (Use of ultrapasteurized skim milk as a diluent for refrigerated donkey semen destined for mare insemination.) In: Revista veterinaria (Veterinary Journal) Mexico 2000;31(1):67-69.
20. BRUM A, SABEUR K, BALL B. Apoptotic-like changes in equine spermatozoa separated by density-gradient centrifugation or after cryopreservation. Theriogenology 2008;69:1041-1055.
21. LISBOA F, HARTWIG F, MAZIERO R, MONTEIRO G, PAPA F, DELL'AQUA J. Use of L-carnitine and acetyl-L-carnitine in cooled-stored stallion semen. J Equine Vet Sci. 2012;32:475-518.
22. RODRIGUEZ, A.M.; FERRUSOLA, C.O.; GARCIA, B.M.; MORRELL, J.M.; TAPIA, J.A. Y PEÑA, J.F. Freezing stallion semen with the new Caceres extender improves post thaw sperm quality and diminishes stallion-to-stallion variability. Animal Reproduction Science 2011;127(1-2):78-83.
23. HUSSAIN J, SALAM A, GOHAR A. A study on the cryopreservation of stallion semen with alpha lipoic acid. Intl R J of Pharmaceuticals 2011;1(1):21-26.
24. MCNIVEN M, RICHARDSON G. Chilled storage of stallion semen using perfluorochemicals and antioxidants. Cell Preservation Technology 2002;1(3):165-174.
25. LAGOURI V, BOSKOU D. Screening for antioxidant activity of essential oils obtained from spices. Dev Food Sci. 1995;37(1):869-879.
26. ARCILA-LOZANO C, LOARCA-PIÑA G, LECONA-URIBE S, GONZALES DE MEJIA E. El oregano: propiedades, composición y actividad biológica de sus componentes. (Oregano: properties, composition and biological activity of its components.) Arch Latinoam Nutr. 2004;54(1):100-111.
27. AESCHBACH R, LOELIGER J, SCOTT B C, MURCIA A, BUTLER J, HALLIWELL B, et al. Antioxidant action of thymol, carvacrol, 6-gingerol, zingerone and hydroxytyrosol. Food Chem Toxicol. 1994;32(1):31-36.
28. LAGOURI V, BLEKAS G, TSIMIDOU M, KOKKINI S, BOSKOU D. Composition and antioxidant activity of essential oils from Oregano plants grown in Greece. Z Lebensmitt Unters Forsch. 1993;197(1):20-23.
29. AL-MALKI A. Antioxidant properties of thymol and butylatedhydroxytoluene in carbon tetrachloride - induced mice liver injury. JKAU Sci. 2010;22(1):239-248.
30. ROJANO B, GAVIRIA C, MARITZA A, GIL A, SAEZ J, SCHINELLA G, et al. Actividad antioxidante del isoespintanol en diferentes medios. (Antioxidant activity of isoespintanol in different media.) Vitae, Revista de la Facultad de Quimica Farmacéutica 2008;15(1):173-181.
31. ROJANO B, SAEZ J, SCHINELLA G, QUIJANO J, VELEZ E, GIL A. Experimental and theoretical determination of the antioxidant properties of isoespintanol (2-Isopropyl-3,6-dimethoxy-5-methylphenol). J Mol Struct. 2008;877(1-3):1-6.
32. ROJANO B, GAVIRIA C, SÁEZ J. Determinación de la actividad antioxidante en un modelo de peroxidación lipidica de mantequilla inhibida por el isoespintanol. (Determination of antioxidant activity in a butter lipid peroxidation model inhibited by isoespintanol.) Vitae, Revista de la Facultad de Quimica Farmacéutica 2008;15(2):212:218.

## Claims

1. A diluent for semen preservation comprising:
a- a cytoprotective agent selected from: carvacrol, isoespintanol and mixtures thereof;
b- a cryoprotective agent selected from: ethylene glycol, methyl formamide, dimethylformamide, diethylformamide, egg yolk and mixtures thereof; and
c- coadjuvants selected from: glucose, fructose, sucrose, saturated and/or unsaturated lipids, caseins, albumins, seminal plasma, vitamin E, vitamin C, vitamin A, phosphate buffer system, tris buffer system, ascorbic acid, α-tocopherol, β-carotene, caffeine, pentoxifylline, taurine, gentamicin, penicillin, streptomycin, amphotericin and mixtures thereof.

2. A diluent according to Claim 1, wherein the cytoprotective agent has a concentration between 1.0µM and 200µM.

3. A diluent according to Claim 1, comprising:
| *COMPONENT* | *CONCENTRATION* |
|---|---|
| Semi-skimmed milk | 0.1 - 0.9% w/v |
| Sodium caseinates | 1.0 - 5.0% w/v |
| Sucrose | 1.0 - 5.0% w/v |
| Fructose | 0.1 - 1.0% w/v |
| Glucose | 1.0 - 5.0% w/v |
| Gentamicin sulfate | 0.02 - 0.20% w/v |
| Isoespintanol | 1.0 - 200 µM |
| Egg yolk | 1.0 - 10.0% w/v |
| Dimethylformamide | 1.0 - 10.0% w/v |
| Equine seminal plasma | 1.0 - 30.0% w/v |

4. A diluent according to Claim 1, comprising:
| *COMPONENT* | *CONCENTRATION* |
|---|---|
| Semi-skimmed milk | 0.1 - 0.9% w/v |
| Sodium caseinates | 1.0 - 5.0% w/v |
| Sucrose | 1.0 - 5.0% w/v |
| Fructose | 0.1 - 1.0% w/v |
| Glucose | 1.0 - 5.0% w/v |
| Gentamicin sulfate | 0.02 - 0.20% w/v |
| Carvacrol | 1.0 - 200 µM |
| Egg yolk | 1.0 - 10.0% w/v |
| Dimethylformamide | 1.0 - 10.0% w/v |
| Equine seminal plasma | 1.0 - 30% w/v |

5. A diluent according to Claim 1, comprising:
| *COMPONENT* | *CONCENTRATION* |
|---|---|
| Semi-skimmed milk | 0.28 % *(w*/*v)* |
| Sodium caseinates | 1.57 % *(w*/*v)* |
| Sucrose | 2.58 % *(w*/*v)* |
| Fructose | 0.47 % *(w*/*v)* |
| Glucose | 2.03 % *(w*/*v)* |
| Gentamicin sulfate | 0.10 % *(w*/*v)* |
| Isoespintanol | 20.0 µM |
| Chicken egg yolk | 2% v/v |
| Dimethylformamide | 5.0% v/v |
| Ultra-pure water | q. s. 100 mL |

## Patentansprüche

1. Verdünnungsmittel zur Haltbarmachung von Sperma, umfassend:
a) ein zytoprotektives Agens ausgewählt aus: Carvacrol, Isoespintanol und Mischungen hiervon;
b) ein kryoprotektives Agens ausgewählt aus: Ethylenglycol, Methylformamid, Dimethylformamid, Diethylformamid, Eidotter und Mischungen hiervon; und
c) Koadjuvantien ausgewählt aus: Glucose, Fructose, Saccharose, gesättigten und/oder ungesättigten Lipiden, Caseinen, Albuminen, Seminalplasma, Vitamin E, Vitamin C, Vitamin A, Phosphat-Puffersystemen, TRIS-Puffersystemen, Ascorbinsäure, α-Tocopherol, β-Carotin, Coffein, Pentoxifyllin, Taurin, Gentamicin, Penicillin, Streptomycin, Amphotericin und Mischungen hiervon.

2. Verdünnungsmittel nach Anspruch 1, wobei das zytoprotektive Agens eine Konzentration zwischen 1,0 µM und 200 µM aufweist.

3. Verdünnungsmittel nach Anspruch 1, umfassend:
| *KOMPONENTE* | *KONZENTRATION* |
|---|---|
| Teilentrahmte Milch | 0,1 - 0,9% Gew./Vol. |
| Natriumcaseinate | 1,0 - 5,0% Gew./Vol. |
| Saccharose | 1,0 - 5,0% Gew./Vol. |
| Fructose | 0,1 - 1,0% Gew./Vol. |
| Glucose | 1,0 - 5,0% Gew./Vol. |
| Gentamicinsulfat | 0,02 - 0,20% Gew./Vol. |
| Isoespintanol | 1,0 - 200 µM |
| Eidotter | 1,0 - 10,0% Gew./Vol. |
| Dimethylformamid | 1,0 - 10,0% Gew./Vol. |
| Equines Seminalplasma | 1,0 - 30,0% Gew./Vol. |

4. Verdünnungsmittel nach Anspruch 1, umfassend:
| *KOMPONENTE* | *KONZENTRATION* |
|---|---|
| Teilentrahmte Milch | 0,1 - 0,9% Gew./Vol. |
| Natriumcaseinate | 1,0 - 5,0% Gew./Vol. |
| Saccharose | 1,0 - 5,0% Gew./Vol. |
| Fructose | 0,1 - 1,0% Gew./Vol. |
| Glucose | 1,0 - 5,0% Gew./Vol. |
| Gentamicinsulfat | 0,02 - 0,20% Gew./Vol. |
| Carvacrol | 1,0 - 200 µM |
| Eidotter | 1,0 - 10,0% Gew./Vol. |
| Dimethylformamid | 1,0 - 10,0% Gew./Vol. |
| Equines Seminalplasma | 1,0 - 30% Gew./Vol. |

5. Verdünnungsmittel nach Anspruch 1, umfassend:
| *KOMPONENTE* | *KONZENTRATION* |
|---|---|
| Teilentrahmte Milch | 0,28 % *(Gew.*/*Vol.)* |
| Natriumcaseinate | 1,57 % *(Gew.*/*Vol.)* |
| Saccharose | 2,58 % *(Gew.*/*Vol.)* |
| Fructose | 0,47 % *(Gew.*/*Vol.)* |
| Glucose | 2,03 % *(Gew.*/*Vol.)* |
| Gentamicinsulfat | 0,10 % *(Gew.*/*Vol.)* |
| Isoespintanol | 20,0 µM |
| Hühnereidotter | 2% Vol./Vol. |
| Dimethylformamid | 5,0% Vol./Vol. |
| Hochreines Wasser | q. s. 100 mL |

## Revendications

1. Diluant pour la conservation du sperme comprenant :
a- un agent cytoprotecteur choisi parmi : le carvacrol, l'isoespintanol et leurs mélanges ;
b- un agent cryoprotecteur choisi parmi : l'éthylène-glycol, le méthylformamide, le diméthylformamide, le diéthylformamide, le jaune d'œuf et leurs mélanges ; et
c- des coadjuvants choisis parmi : le glucose, le fructose, le saccharose, les lipides saturés et/ou insaturés, les caséines, les albumines, le plasma séminal, la vitamine E, la vitamine C, la vitamine A, un système tampon au phosphate, un système tampon tris, l'acide ascorbique, l'α-tocophérol, le β-carotène, la caféine, la pentoxifylline, la taurine, la gentamicine, la pénicilline, la streptomycine, l'amphotéricine et leurs mélanges.

2. Diluant selon la revendication 1, dans lequel l'agent cytoprotecteur a une concentration comprise entre 1,0 µM et 200 µM.

3. Diluant selon la revendication 1, comprenant :
| *COMPOSANT* | *CONCENTRATION* |
|---|---|
| lait demi-écrémé | 0,1 à 0,9 % en poids/volume |
| caséinates de sodium | 1,0 à 5,0 % en poids/volume |
| saccharose | 1,0 à 5,0 % en poids/volume |
| fructose | 0,1 à 1,0 % en poids/volume |
| glucose | 1,0 à 5,0 % en poids/volume |
| sulfate de gentamicine | 0,02 à 0,20 % en poids/volume |
| isoespintanol | 1,0 à 200 µM |
| jaune d'œuf | 1,0 à 10,0 % en poids/volume |
| diméthylformamide | 1,0 à 10,0 % en poids/volume |
| plasma séminal équin | 1,0 à 30,0 % en poids/volume |

4. Diluant selon la revendication 1, comprenant :
| *COMPOSANT* | *CONCENTRATION* |
|---|---|
| lait demi-écrémé | 0,1 à 0,9 % en poids/volume |
| caséinates de sodium | 1,0 à 5,0 % en poids/volume |
| saccharose | 1,0 à 5,0 % en poids/volume |
| fructose | 0,1 à 1,0 % en poids/volume |
| glucose | 1,0 à 5,0 % en poids/volume |
| sulfate de gentamicine | 0,02 à 0,20 % en poids/volume |
| carvacrol | 1,0 à 200 µM |
| jaune d'œuf | 1,0 à 10,0 % en poids/volume |
| diméthylformamide | 1,0 à 10,0 % en poids/volume |
| plasma séminal équin | 1,0 à 30,0 % en poids/volume |

5. Diluant selon la revendication 1, comprenant :
| *COMPOSANT* | *CONCENTRATION* |
|---|---|
| lait demi-écrémé | 0,28 % (en poids/volume) |
| caséinates de sodium | 1,57 % (en poids/volume) |
| saccharose | 2,58 % (en poids/volume) |
| fructose | 0,47 % (en poids/volume) |
| glucose | 2,03 % (en poids/volume) |
| sulfate de gentamicine | 0,10 % (en poids/volume) |
| isoespintanol | 20,0 µM |
| jaune d'œuf de poule | 2 % en volume/volume |
| diméthylformamide | 5,0 % en volume/volume |
| eau ultrapure | q.s. 100 ml |
